# EUROPEAN PATENT APPLICATION

(11) **EP 4 851 081 A1**
(43) Date of publication of application: **09.12.2026**
(21) Application number: 26175637.3
(22) Date of filing: 30.04.2026
(51) Int. Cl.: B65G 61/00, B65G 59/00, B65G 59/02

(54) **DEPALLETISER AND METHOD FOR DEPALLETISING AN OFFSET LAYER OF CONTAINERS**

(30) Priority: 06.06.2025 IT 202500013228
(71) Applicant: CLEVERTECH S.p.A., 42023 Cadelbosco di Sopra (RE) (IT)
(72) Inventor: CERVI, Simone, 42023 CADELBOSCO DI SOPRA (REGGIO NELL'EMILIA) (IT)
(74) Representative: Monelli, Alberto

(57) **Abstract**

Depalletiser for depalletising a stack of layers of containers, comprising:
- a squaring device (2) intended to surround the penultimate upper layer of the stack; said squaring device (2) comprising at least one frame (20) and a first sidewall (21) movable with respect to the frame (20);
- detection means (3) for detecting the position of at least one edge of a layer;
- movement means (4) for moving the first sidewall with respect to the frame (20) as a function of an input coming from the detection means (3);
- a movement head (5) for moving the upper layer of the stack comprising a pushing flank (51) and two side flanks (52, 53) for containment of the layer.

## Description

The object of the present invention is a depalletiser and a method for depalletising a stack of layers of containers.

Depalletisers that remove layers of loose containers stacked on top of each other are known. In this regard, a movement head for moving the upper layer which acts as a compactor of the product before moving it towards a belt is known. The compactor comprises, for example, movable sidewalls which compact the upper layer before moving it off the stack. In order to remove the upper layer, the movement head is positioned in a predetermined zone relative to references of the depalletiser, where it is expected to find the layer to be removed. There can sometimes be certain types of layers of products which, if stacked in high stacks, cause a major deviation of the stack relative to the vertical position. For example, at the upper layer, such deviation can even be 20 centimetres.

A drawback of such a solution is therefore linked to the fact that the movement head is not centred relative to the upper layer which, due to sloping of the stack, is not in a predetermined position relative to a fixed reference of the machine. Furthermore, the action of the compactor can even cause one or more products to fall, since they are compacted in a zone where the support of the underlying layers could be lost.

In this context, the technical task underlying the present invention is to propose a depalletiser and a depalletising method which overcome the drawbacks of the prior art cited above.

In particular, an object of the present invention is to provide a depalletiser and a depalletising method which allows the action thereof to be carried out even in the case of the stack of layers having a deviation relative to the vertical position. The defined technical task and the specified aims are substantially achieved by a depalletiser and a depalletising method comprising the technical features set forth in one or more of the appended claims.

Further features and advantages of the present invention will become more apparent from the indicative and thus non-limiting description of a preferred but non-exclusive embodiment of a depalletiser as illustrated in the appended drawings, in which:
- Figures 1 and 2 show a perspective view and a top view of a depalletiser according to the present invention;
- Figure 3 shows a view according to the section plane AA in Figure 2;
- Figures 4 and 5 show two enlargements of Figure 3;
- Figure 6 shows a view according to the section plane BB in Figure 3;
- Figures 7 and 8 show two enlargements of Figure 6;
- Figures 9, 15, 17, 18, 19 show, in sequence, working steps of the depalletiser of Figure 1 according to the viewpoint of Figure 3;
- Figures 10 and 11 show details of Figure 9;
- Figure 12 shows a depalletiser in the configuration of Figure 9 according to the viewpoint of Figure 6;
- Figures 13 and 14 show two enlargements of Figure 12;
- Figure 16 shows a depalletiser in the configuration of Figure 15 according to the viewpoint of Figure 6;
- Figures 20 to 27 show a sequence of steps of an alternative solution of the depalletiser according to the present invention.

In the appended drawings, reference number 1 denotes a depalletiser for depalletising a stack of layers of containers. The depalletiser 1 comprises a squaring device 2 intended to surround the penultimate upper layer of the stack. The squaring device 2 positioned around the penultimate upper layer of the stack serves to avoid said layer from being dragged away or moved while the upper layer is being removed.

The squaring device 2 comprises at least one frame 20. Such frame 20 can define a closed perimeter, typically quadrilateral, or it can be extended according to a C-shaped line. The squaring device 2 therefore fits onto the stack from above. The frame 20 preferably cannot be opened to approach the stack at mid-height. The squaring device 2 comprises a first sidewall 21 movable with respect to the frame 20. Typically, the first sidewall 21 is moved with respect to the frame 20, remaining on a plane, typically horizontal. In particular, the first sidewall 21 translates with respect to the frame 20. The first sidewall 21 is opportunely rectilinear (opportunely it extends in a straight line in the horizontal direction).

The depalletiser 1 comprises detection means 3 for detecting the position of at least one edge of a layer. The detection means 3 can be of various type and several examples will be indicated hereunder.

The depalletiser 1 comprises movement means 4 for moving the first sidewall 21 with respect to the frame 20 as a function of an input coming from the detection means 3. Opportunely, the movement means 4 for moving the first sidewall 21 comprises an actuator that can be electric or fluid-dynamic.

The depalletiser 1 comprises a movement head 5 for moving the upper layer of the stack. The movement head 5 is advantageously constrained to move along a number of predefined directions, for example a horizontal direction and vertically. As an alternative, in a non-preferred solution the head 5 can be moved by an articulated arm, for example a 6-axis one. The movement head 5 comprises a pushing flank 51 and two side flanks 52, 53 for containment of the layer. The pushing flank 51 and two side flanks 52, 53 identify a housing zone 54 for a layer of containers to be depalletised. The pushing flank 51 and two side flanks 52, 53 can be moved closer to or away from the centre of such housing zone 54. Advantageously, the extent by which the pushing flank 51 and/or the two side flanks 52, 53 must be moved (in order to approach/move away from the centre of the zone 54) is determined as a function of the information acquired previously by the means 3 (for example, but not necessarily, during movement of the corresponding sidewalls of the squaring device 2; as an alternative, based on the information detected by the means 3 independently of the movement of the sidewalls of the squaring device). Opportunely, the movement head 5 can also comprise a front flank 55.

The front flank 55 can be opposite to the pushing flank 51. The front flank 55 can also be moved closer to/away from the centre of the housing zone 54. It contributes to defining the housing zone 54.

The detection means 3 for detecting the position comprises a first sensor 31. In a particular solution, the first sensor 31 is movable together with the first sidewall 21 to detect the presence of the edge of a layer. In the case of loose products, such an edge is the edge of the envelope of such containers. Alternatively, the first sensor 31 might not be on the first sidewall 21, but, for example, be positioned on the frame 20; or not be on the head 5. For example, the first sensor 31 could be a visual sensor such as a video camera or a detection sensor such as a photocell or an infrared sensor. For example, the first sensor 31 is solidly constrained to the first sidewall 21 and is positioned in front of the first sidewall 21 with respect to the direction of advancement towards the centre of the frame 20. For example, it can be oriented along a direction parallel to the extension of the first sidewall 21. It can thus identify the edge of the layer just before it comes into contact with the first sidewall 21.

In an alternative solution, the detection means 3 could comprise image acquisition means. For example, it could comprise several video cameras. For example, it might not be on the movement head 5. In particular, it could be positioned at a zone in which the stack is located.

In a preferred solution, the squaring device 2 comprises a second sidewall 22 which is movable with respect to the frame 20. Opportunely, the squaring device 2 comprises a third sidewall 23 which is movable with respect to the frame 20. Opportunely, the squaring device 2 comprises a fourth sidewall 24 which is movable with respect to the frame 20.

The first and/or second and/or third and/or fourth sidewall 21, 22, 23, 24 are movable with respect to the frame 20 independently from one another. They can thus be adapted to the actual position of the edge of the penultimate layer of containers.

What is described above in reference to the first sidewall 21 can be repeated for the second sidewall 22 and/or the third sidewall 23 and/or the fourth sidewall 24.

Opportunely, the first, the second, the third and the fourth sidewall 21, 22, 23, 24 delimit in combination a quadrilateral zone. Possibly, one or more of the movable sidewalls described above could be absent. In that case, the sidewall could be fixed and an integral part of the frame 20.

Advantageously, the depalletiser 1 comprises a second sensor 32 for detecting the position of an edge of a layer. In a particular solution, the second sensor 32 is movable together with the second sidewall 22 to detect the presence of the edge of a layer. Alternatively, the second sensor 32 might not be on the second sidewall 22, but, for example, be positioned on the frame 20; or not be on the head 5.

Advantageously, the depalletiser 1 comprises a third sensor 33 for detecting the position of an edge of a layer. In a particular solution, the third sensor 33 is movable together with the third sidewall 23 to detect the presence of the edge of a layer. Alternatively, the third sensor 33 might not be on the third sidewall 23, but, for example, be positioned on the frame 20; or not be on the head 5.

Advantageously, the depalletiser 1 comprises a fourth sensor 34 for detecting the position of an edge of a layer. In a particular solution, the fourth sensor 34 is movable together with the fourth sidewall 24 to detect the presence of the edge of a layer. Alternatively, the fourth sensor 34 might not be on the fourth sidewall 24, but, for example, be positioned on the frame 20; or not be on the head 5.

Opportunely, the depalletiser 1 comprises gripping means 6 for gripping a divider (normally horizontal) between one layer and the other of the stack (such divider is usually a sheet, for example made of paper or cardboard). The gripping means 6 comprises, for example, a gripper. The gripper allows the divider to be retained, for example while the movement head 5 removes the overlying layer. The depalletiser 1 also comprises a mover 60 for moving the gripping means 6 between a position close to the stack and a distanced position. In the close position, the gripping means 6 can grip the divider, in the distanced position it is idle and opportunely not an obstacle. The mover 60 of the gripping means 6 can be controlled as a function of an input coming from the movement of the first sidewall 21. For example, the first sidewall 21 can be associated with a system that detects the movement thereof with respect to the frame 20 (for example, an encoder). Such system that detects the movement thereof can therefore control the mover 60. For example, it can record to what extent the first sidewall 21 has moved before being stopped by the first sensor 31 and, as a function of such information, the mover 60 can move the gripping means 6. In an alternative solution, the gripping means 6 can be on the first sidewall 21 and be moved solidly constrained to it.

The depalletiser 1 opportunely comprises a table 7 for receiving the upper layer of the stack. The table 7 is, for example, a rest surface.

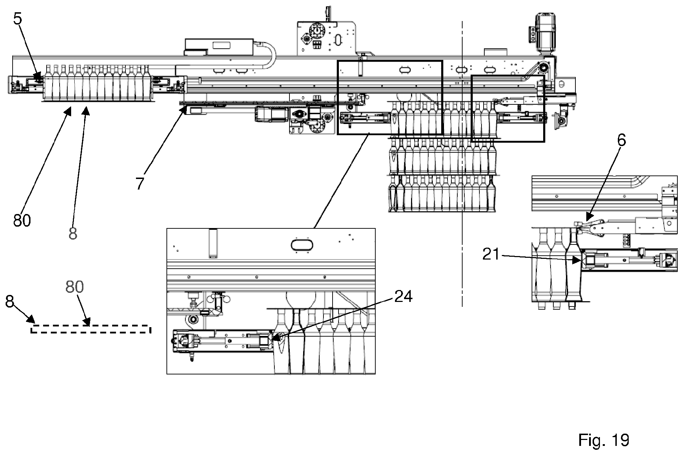

The depalletiser 1 comprises a conveyor 8 for conveying a layer of the stack. The conveyor 8 is, for example, a conveyor belt. The depalletiser 1 can comprise an unloading surface 80. For example, such unloading surface 80 can be fixed or can be integrated into the conveyor 8. In the solution illustrated in a continuous line in Figure 19, the conveyor 8 is on a level with the upper layer of the stack. However, it could possibly be lower down (see broken line solution).

The table 7 is movable forwards and backwards with respect to the stack. In particular, it can translate to be moved closer to/away from the stack.

The table 7 is liftable and lowerable to position it in a first position on a level with the upper layer of the stack and in a second position on a level with the unloading surface 80 (see the unloading surface 80 as a broken line in Figure 19), in particular of the conveyor 8. The movement head 5 is intended to perform a movement through sliding of the layer from the stack to the table 7 (alongside) and from the table 7 to the unloading surface 80 (alongside). The movement head 5 can possibly have suction means for the layer. If present, it facilitates stable movement. However, the suction means is usually absent. The movement is therefore entrusted solely to the pushing action of the head 5, which causes the layer to slide onto one or more underlying supports. The movement head 5 is liftable and lowerable solidly constrained to the table 7.

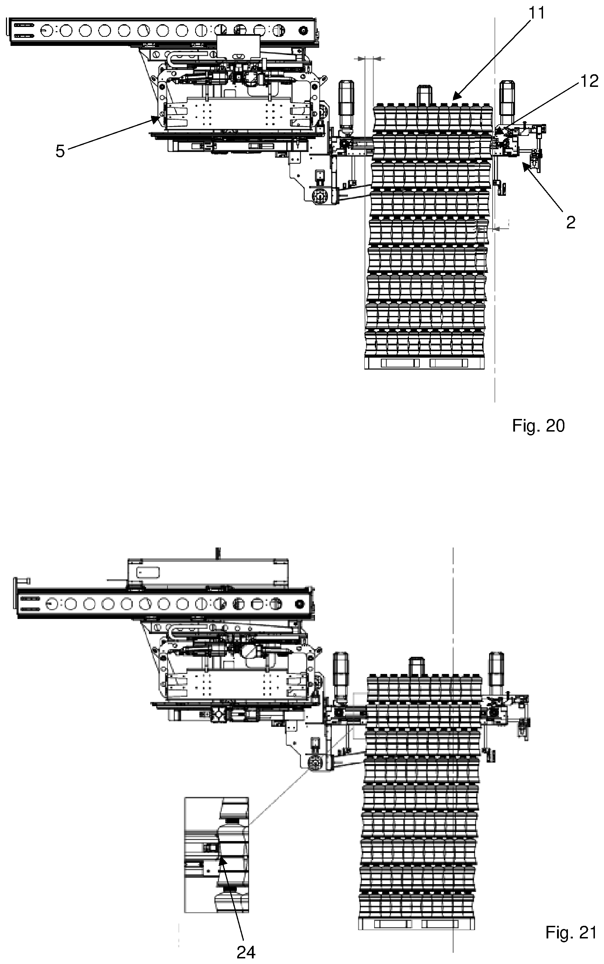

In a particular embodiment illustrated in Figures 20 to 27, the squaring device 2 and the movement head 5 are entirely independent. In particular, the squaring device 2 has its own frame 20, whereas the movement head 5 comprises its own frame. In that case, the movement head 5 is moved from the stack to the conveyor 8 independently from the frame 20.

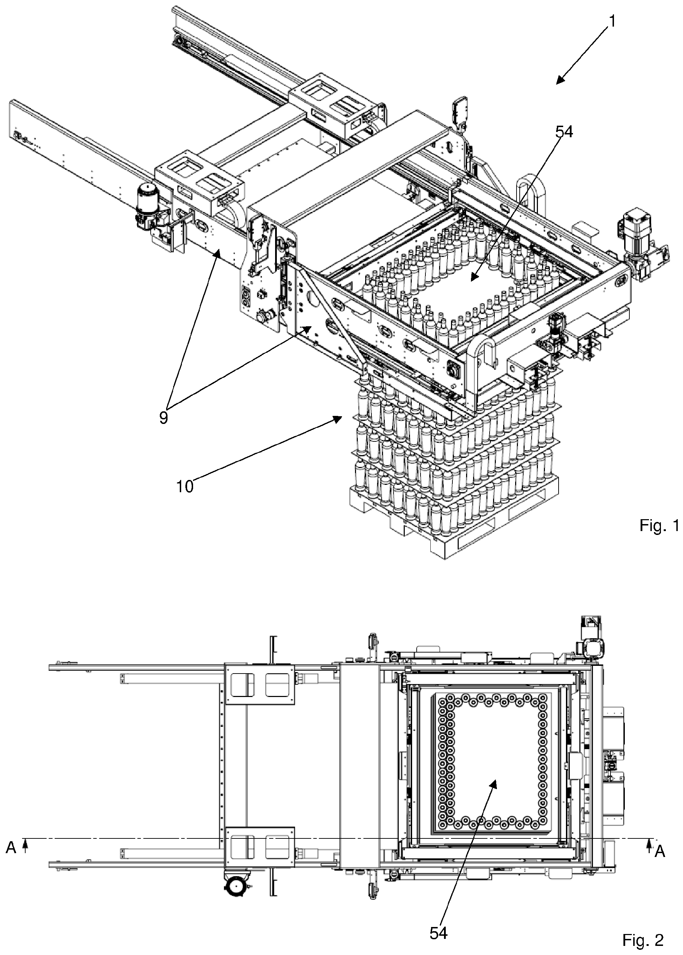

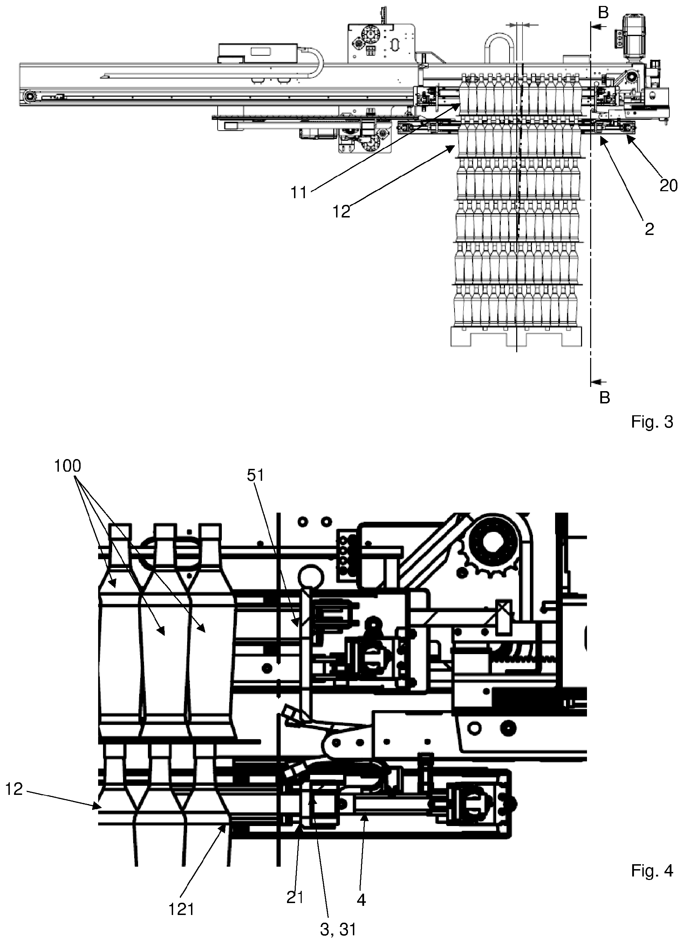

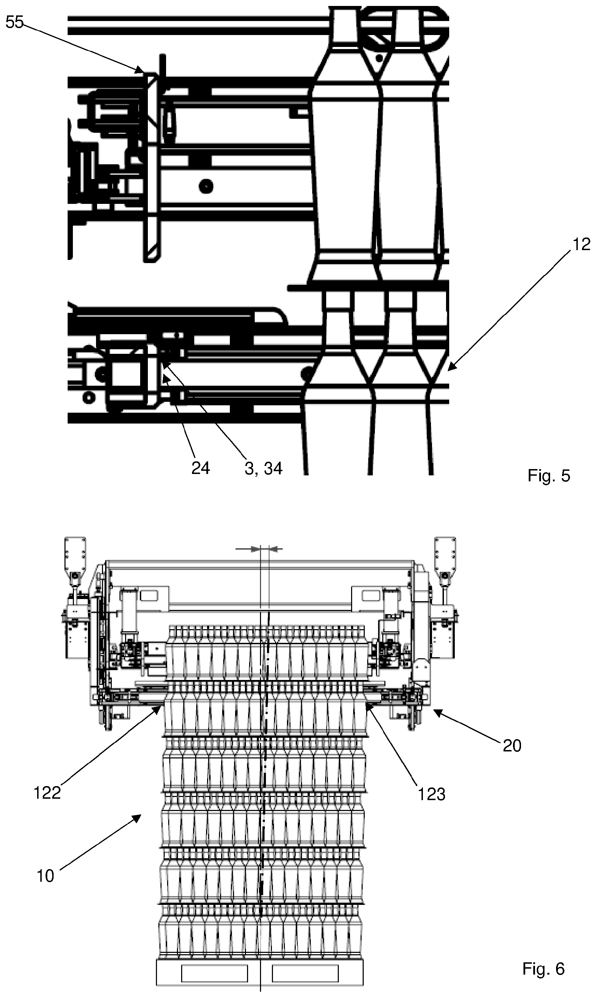

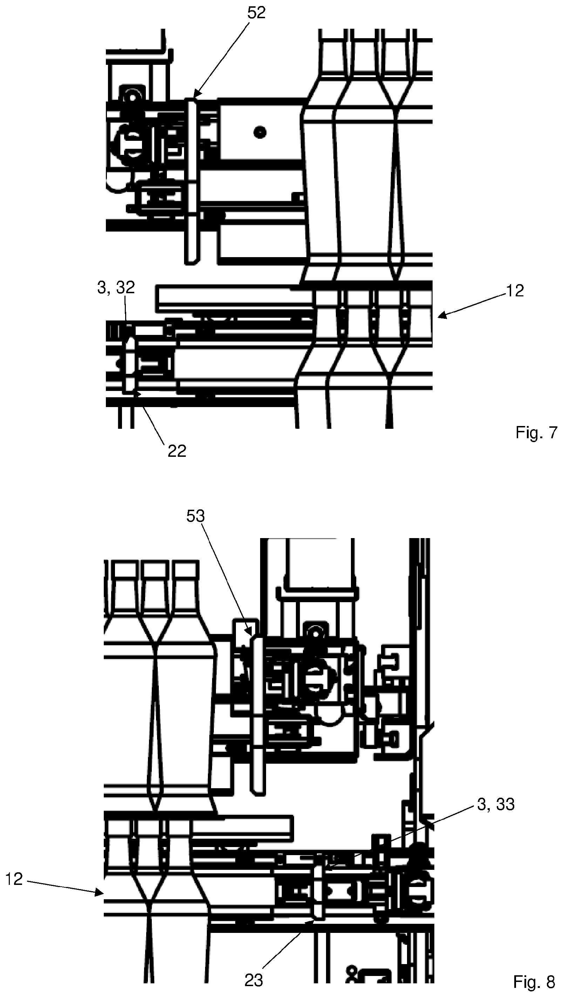

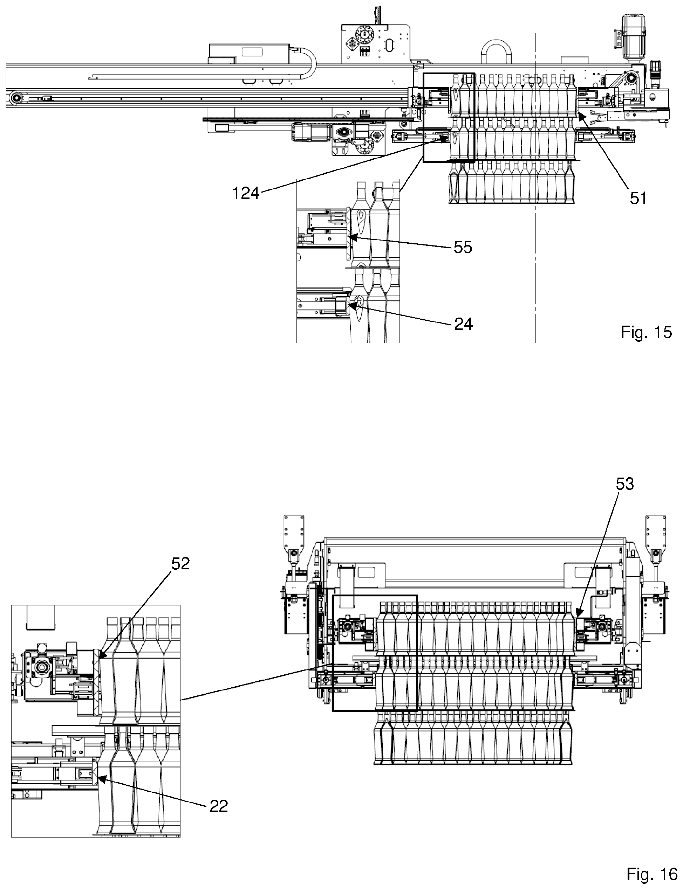

In a particular embodiment (see Figures 1 to 19), the depalletiser 1 comprises a common structure 9 that acts as a frame for both the squaring device 2 and the movement head 5. In that case, the movement head 5 can be moved horizontally with respect to the common structure 9. However, such common structure is raised and lifted solidly constrained to the movement head 5 during at least one part of the movement thereof from the stack to the conveyor 8 (if the conveyor 8 is the one of the broken line in Figure 19). A lowering of the head 5 therefore corresponds with a lowering of the squaring device 2.

A further object of the present invention is a method for depalletising a stack 10 of layers of containers 100. The containers 100 can be closed and containing the product or empty and not closed yet. Opportunely, the layers of the stack 10 are separated by dividers 101 (for example, a sheet of paper or cardboard). The containers 100 can be made of plastic or metal material. Opportunely, the containers 100 of the layers are loose (they are therefore preferably arranged in a regular manner on the layer, but are movable independently from one another). Opportunely, such a method is implemented by a depalletiser 1 having one or more of the features described previously.

The method comprises the step of applying a squaring device 2 around the penultimate upper layer 12 of the stack 10. The squaring device 2 comprises a frame 20 and at least a first sidewall 21 movable with respect to the frame 20. The squaring device 2 therefore surrounds the penultimate layer 12 of the stack. The squaring device 2 fits onto the stack from above. It is therefore positioned at the height of the penultimate layer 12 (see Figures 1 to 8 which show such configuration).

The method comprises the step of moving the first sidewall 21 as a function of the position of a first edge 121 of the penultimate layer 12 of the stack 10. The first edge 121 is the one that faces the first sidewall 21. The step of moving the first sidewall 21 occurs after having applied the squaring device 2 around the penultimate upper layer 12.

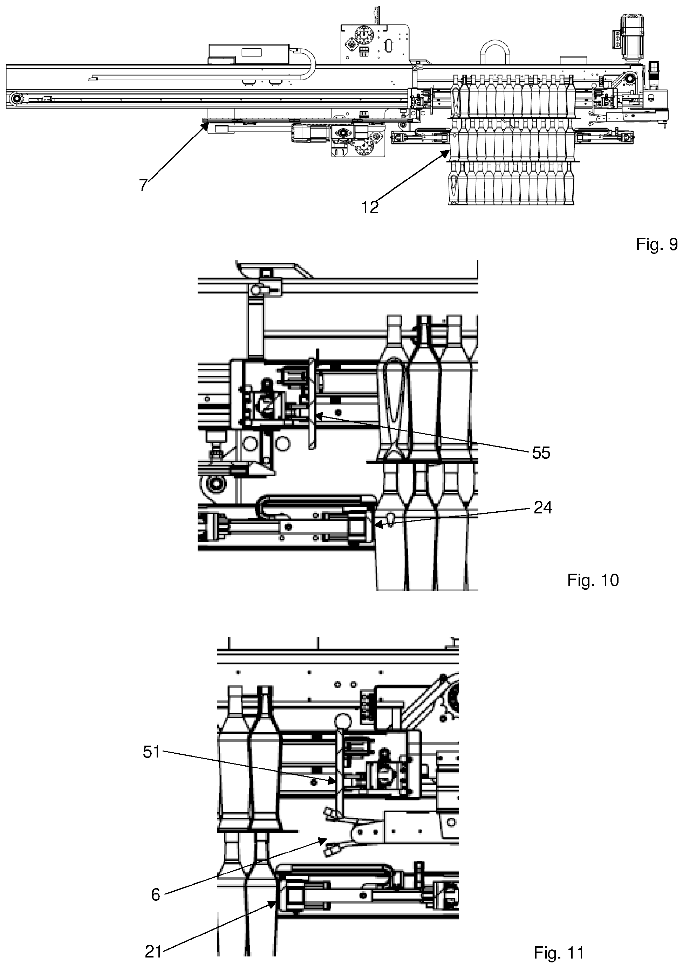

The step of moving the first sidewall 21 provides for bringing the first sidewall 21 close to the first edge 121. Opportunely, this provides for interrupting the approach before coming into contact with the first edge 121 (see Figure 11).

The step of bringing the first sidewall 21 close to the first edge 121 provides for detecting (by means of a first sensor 31) the relative position between the first sidewall 21 and the first edge 121. Opportunely, the first sensor 31 is positioned on the first sidewall 21. In an alternative solution, the first sensor 31 is positioned on the head 5, but is not solidly constrained to the first sidewall 31. The first sensor 31 could possibly be external to the head 5. First sensor 31 could mean, for example, a visual sensor (in particular, a video camera) or a detection sensor for detecting an obstacle (in particular a photocell).

In a preferred solution, the squaring device 2 comprises a second sidewall 22 which is advantageously movable with respect to the frame 20. Opportunely, the squaring device 2 comprises a third sidewall 23 which is advantageously movable with respect to the frame 20. Opportunely, the squaring device 2 comprises a fourth sidewall 24 which is advantageously movable with respect to the frame 20.

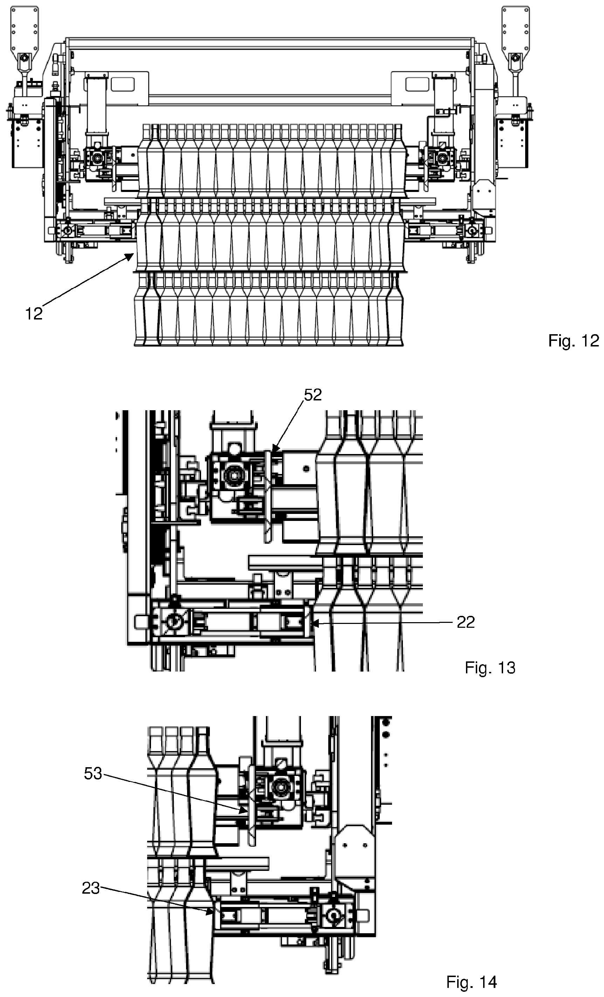

The method comprises the step of bringing the second sidewall 22 close to a second edge 122 of the penultimate upper layer 12 (see Figure 13). The step of bringing the second sidewall 22 close is opportunely interrupted before contact with the second edge. Opportunely, such interruption occurs based on the information coming from a second sensor 32 (the step of bringing the second sidewall 22 close to the second edge 122 provides for detecting - by means of a second sensor 32 - the relative position between the second sidewall 22 and the second edge 122).

The method comprises the step of bringing the third sidewall 23 close to a third edge 123 of the penultimate upper layer 12 (see Figure 14). The step of bringing the third sidewall 23 close is opportunely interrupted before contact with the third edge 123. Opportunely, such interruption occurs based on the information coming from a third sensor 33. The step of bringing the third sidewall 23 close to the third edge 123 provides for detecting (by means of a third sensor 33) the relative position between the third sidewall 23 and the third edge 123.

The method comprises the step of bringing the fourth sidewall 24 close to a fourth edge 124 of the penultimate upper layer 12 (see Figure 10). The step of bringing the fourth sidewall 24 close is advantageously interrupted before contact with the fourth edge 124. Opportunely, such interruption occurs based on the information coming from a fourth sensor 34. The step of bringing the fourth sidewall 24 close to the fourth edge 124 provides for detecting (by means of a fourth sensor 34) the relative position between the fourth sidewall 24 and the fourth edge 124.

As described above, there is a sensor for each sidewall. In an alternative solution, a common sensor could be present (for example, a video camera not associated with a single sidewall) that detects information which allows information for interrupting the approach of one or more sidewalls to be provided.

Opportunely, the approach of the first sidewall 21 to the penultimate upper layer of the stack occurs independently of the approach of the second and/or the third and/or the fourth sidewall 21, 22, 23, 24 to the penultimate upper layer of the stack. Opportunely, the approach of the first sidewall 21 to the penultimate upper layer of the stack is at least partly simultaneous with the approach of the second and/or the third and/or the fourth sidewall 21, 22, 23, 24 to the penultimate upper layer of the stack.

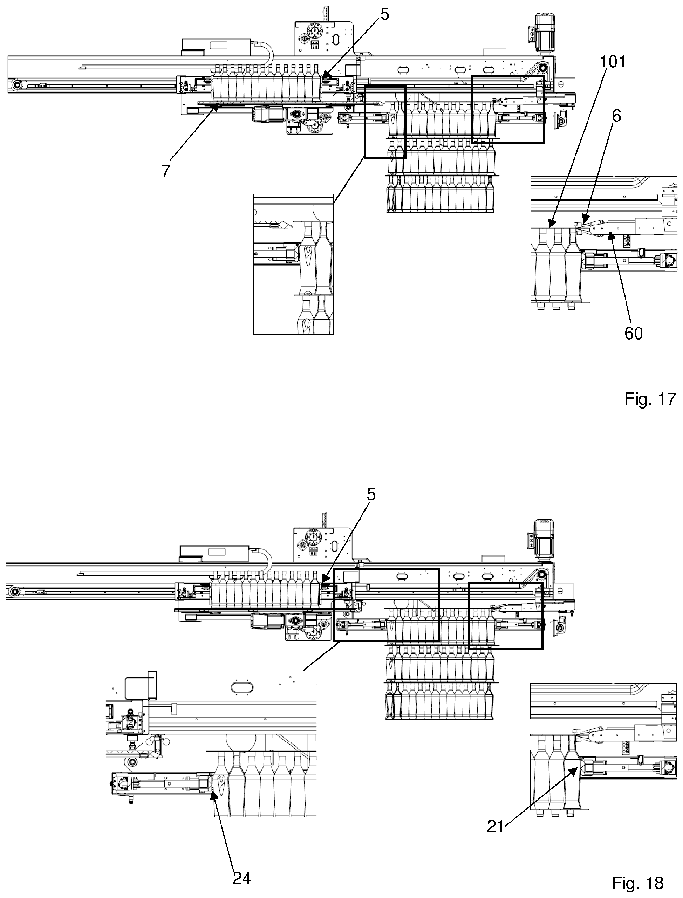

The method comprises the step of moving an upper layer 11 of the stack 10 by means of a movement head 5 (see Figure 17). Such step occurs after said step of moving the first sidewall 21 as a function of the position of the first edge 121 (and advantageously after having also moved the other sidewalls movable with respect to the frame, as better explained below). The head 5 comprises a pushing flank 51 and two side flanks 52, 53. The pushing flank 51 is the one that pushes the layer in the advancement direction. The two side flanks 52, 53 allow the layer to remain united (they prevent the products of the layer from escaping laterally). The two side flanks 52, 53 are reciprocally opposite to one another. Opportunely, a front flank opposite to the pushing flank 51 can be present. In this manner, the pushing flank 51, the side flanks 52, 53 and the front flank define a housing zone for the layer being moved.

After positioning of the head 5 around the upper layer 12, but before the upper layer 11 is moved, it is possible to provide for the step of bringing the pushing flank 51 and/or the two side flanks 52, 53 close to the upper layer 11. Opportunely, in such step, the pushing flank 51 and/or the two side flanks 52, 53 are controlled based on information detected by the detection means 3 (opportunely in real time or acquired previously, for example during the approach of the sidewalls of the squaring device 2). For example, the step of bringing the pushing flank 51 close to the upper layer can be controlled based on the approach of the first sidewall 21 to the penultimate layer 12 of the stack (for example, an encoder could be present that records to what extent the first sidewall 21 has been brought close, the encoder being, in turn, controlled based on information detected by the detection means 3). In particular, the detection means 3 gives a signal to establish when to arrest the movement of the pushing flank 51 and possibly the two side flanks 52, 53. In the preferred solution, the pushing flank 51 and/or the two side flanks 52, 53 are guided by information acquired previously during the movement of the sidewalls. In fact, as a function of the extent to which one or more of the sidewalls of the squaring device 2 have been moved previously, it will be possible to decide to what extent to move the pushing flank 51 and/or the two side flanks 52, 53 in order to position them at the upper layer without damaging the products (typically they will be moved by the same amount as the corresponding underlying sidewall).

The pushing flank 51 will therefore be brought close to the upper layer 11 as a function of the position of the first sidewall 21 (which is underneath and at the pushing flank 51). The two side flanks 52, 53 will be brought close to the last layer 11 of the stack as a function of the position of the second and the third sidewall 22, 23 with respect to the penultimate layer 12 of the stack (it should be noted that the second sidewall 22 is underneath and at one of the two side flanks 52, 53; the third sidewall 23 is underneath and at the other of the two side flanks 52, 53). The front flank 55 will be brought close to the upper layer 11 as a function of the position of the fourth sidewall 24 (which is underneath and at the front flank 55).

Opportunely, the pushing flank 51 and/or the two side flanks 52, 53 and/or the front flank 55 will be moved to define a housing zone 54, the perimeter of which is positioned on the vertical projection upwards of the perimeter delimited by the first, second, third, fourth sidewall 21, 22, 23, 24 of the squaring device 2.

In other words, the method comprises the steps of:
- positioning the head 5 around the upper layer 12 of the stack; and then
- bringing the pushing flank 51 and the two side flanks 52, 53 close to the upper layer 11 based on information detected by the detection means 3 acquired previously during the step of bringing the sidewalls of the squaring device 2 close to corresponding edges of the penultimate upper layer 12.

Alternatively, the pushing flank 51 and the two side flanks 52, 53 are brought close to the upper layer 11 based on information coming from the detection means 3 and not connected to the movement or to the position of the sidewalls of the squaring device 2.

The step of moving the upper layer 11 provides for sliding the upper layer 11 of the stack 10 in order to position it on a table 7 arranged alongside the stack. Opportunely, during this step the head 5 accompanies the movement of the layer 11. Opportunely, during such movement the head 5 does not perform a suction action on the layer 11 (which is moved only through sliding thanks to the action of the pushing flank 51).

Subsequently, the table 7 and the head 5 are moved in order to position the table 7 on a level with (alongside) an unloading surface 80; the unloading surface 80 could be on a level with the upper layer of the stack (solution illustrated with a continuous line in Figure 19) or underneath (solution illustrated with a broken line in Figure 19); in a particular solution, the unloading surface could be/form part of a conveyor 8 (in particular a conveyor belt). For example, the table 7 and the conveyor 5 could be translated and/or lowered (typically vertically). The head 5 therefore moves the layer 11 from the table 7 to the conveyor 8 (such operation is performed, for example, through sliding of the layer 11, for example onto the table 7 and onto the conveyor 8/unloading surface 80; see, for example, Figure 19).

The head 5 is then usually raised, realigned with the stack and the steps described will be repeated iteratively.

In a solution not illustrated, the squaring device 2 is lowered together with the head 5 and the table 7 in order to position itself on a level with the conveyor 8. In that case, the squaring device 2 continues, however, to surround the stack 10.

In the solution shown in the appended figures (see, in particular, Figure 19), the squaring device 2 is not lowered together with the head 5 and the table 7 as far as the conveyor 8 (version indicated with dashed lines). In such case, the squaring device 2 is, in fact, physically independent from the head 5. Such a solution has higher costs of manufacture, but allows a greater flexibility and operating speed.

In the solution of Figures 20 to 27, the squaring device 2 has its own frame 20, whereas the movement head 5 comprises its own separate frame.

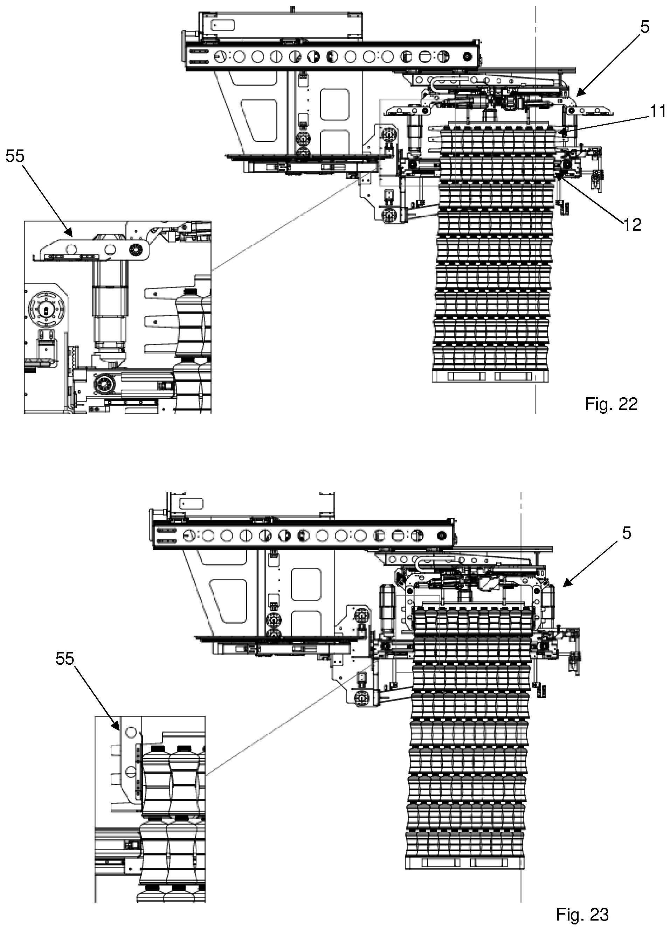

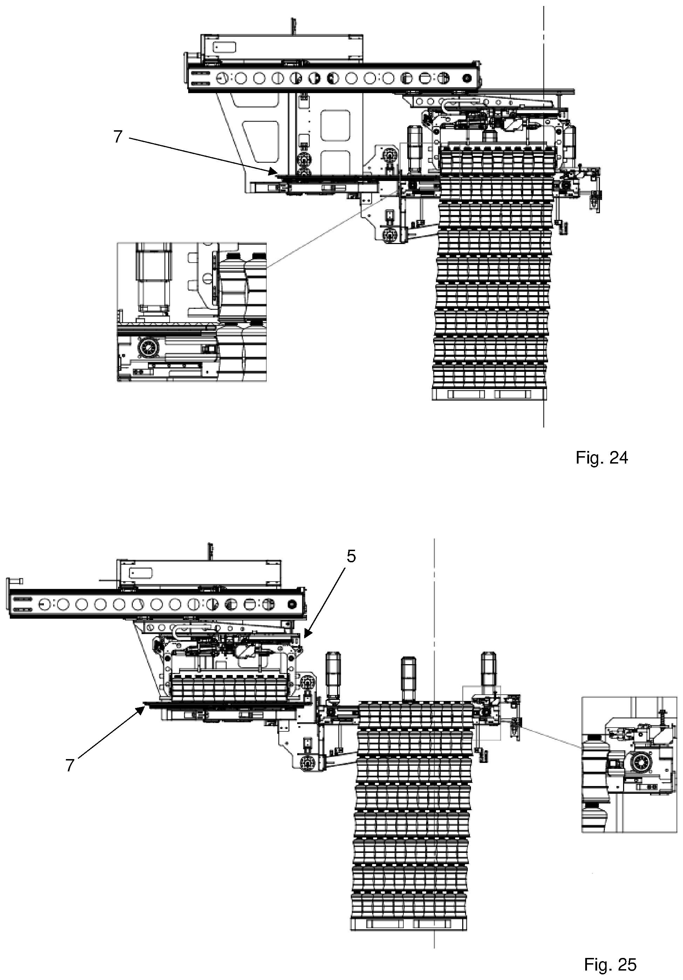

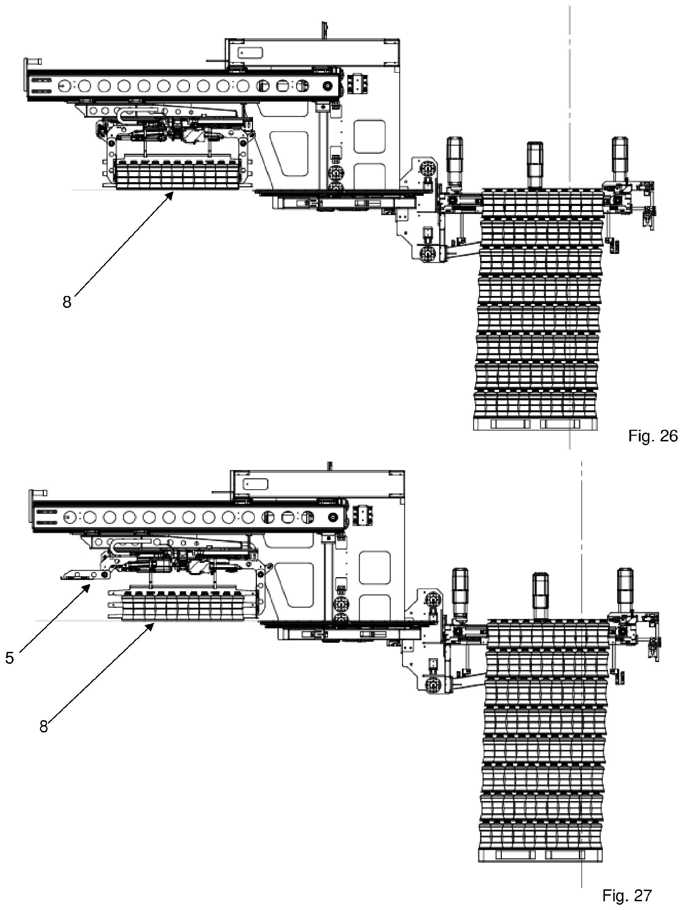

In particular, the method for depalletising a stack of layers of containers is summarised in the following sequence of steps:
- the squaring device 2 is positioned around the penultimate layer 12 of the stack (Figure 20);
- the squaring device 2 brings its sidewalls close to the penultimate layer 12 of the stack in order to retain it (Figure 21);
- the head 5 is positioned above the upper layer 11 of the stack (Figure 22);
- the head 5 embraces the upper layer 11 of the stack (Figure 23);
- the table 7 is brought close to the upper layer 11 of the stack (Figure 24);
- the gripping means 6 grips the divider and the head 5 transfers the upper layer 11 onto the table 7 (Figure 25);
- transfer of the layer 11 from the table 7 to the conveyor 8 (Figure 26);
- the head 5 releases the layer 11 (Figure 27).

The present invention achieves important advantages.

In particular, it allows maximum operating flexibility and can be adapted even in the case in which the stack has major deviations from the vertical position.

Furthermore, the squaring device does not perform a clamping action on the penultimate layer and there is therefore no risk of stressing the containers and the products contained therein. Similarly, the movement head 5 does not perform a clamping action on the upper layer.

The invention thus conceived is susceptible to numerous modifications and variants, all falling within the scope of the inventive concept that characterises it. Moreover, all the details may be replaced by other technically equivalent elements. All the materials used, as well the dimensions, may in practice be any whatsoever according to needs.

## Claims

1. A depalletiser for depalletising a stack of layers of containers, comprising:
- a squaring device (2) intended to surround the penultimate upper layer of the stack; said squaring device (2) comprising at least one frame (20) and a first sidewall (21) movable with respect to the frame (20);
- detection means (3) for detecting the position of at least one edge of a layer;
- movement means (4) for moving the first sidewall (21) with respect to the frame (20) as a function of an input coming from the detection means (3);
- a movement head (5) for moving the upper layer of the stack comprising a pushing flank (51) and two side flanks (52, 53) for containment of the layer.

2. The depalletiser according to claim 1, **characterised in that** the position detection means (3) comprises a first sensor (31) movable together with the first sidewall (21) to detect the presence of the edge of a layer.

3. The depalletiser according to claim 1 or 2, **characterised in that** the squaring device (2) comprises:
- a second, a third and a fourth sidewall (22, 23, 24) that are movable with respect to the frame (20);
- a second sensor (32) for detecting the position of an edge of a layer, said second sensor (32) being movable together with the second sidewall (22) to detect the presence of the edge of a layer;
- a third sensor (33) for detecting the position of an edge of a layer, said third sensor (33) being movable together with the third sidewall (23) to detect the presence of the edge of a layer;
- a fourth sensor (34) for detecting the position of an edge of a layer, said fourth sensor (34) being movable together with the fourth sidewall (24) to detect the presence of the edge of a layer.

4. The depalletiser according to any one of the preceding claims, **characterised in that** it comprises:
- gripping means (6) for gripping a horizontal divider between one layer and the other of the stack;
- a mover (60) for moving the gripping means (6) between a position close to the stack and a position distanced from the stack; said mover (60) being controlled as a function of an input coming from the detection means (3).

5. The depalletiser according to any one of the preceding claims, **characterised in that** it comprises:
- a table (7) for receiving the upper layer of the stack;
- a conveyor (8) for conveying a layer of the stack;
said table (7) being liftable and lowerable to position it in a first position alongside the upper layer of the stack and in a second position alongside the conveyor (8); said movement head (5) being intended to perform a displacement by sliding of the layer from the stack to the table (7) and from the table (7) to the conveyor (8); said movement head (5) being liftable and lowerable solidly constrained to the table (7).

6. The depalletiser according to any one of the preceding claims, **characterised in that** it comprises a common structure (9) that acts as a frame for both the squaring device (2) and the movement head (5).

7. A method for depalletising a stack of layers of containers, comprising the steps of:
- applying a squaring device (2) around the penultimate upper layer (12) of the stack (10); said squaring device (2) comprising a frame (20) and at least a first sidewall (21) movable with respect to the frame (20);
- moving said first sidewall (21) as a function of the position of a first edge (121) of the penultimate layer (12) of the stack (10), said first edge (121) facing said first sidewall (21);
- moving an upper layer (11) of the stack (10) by means of a movement head (5), said head (5) comprising a pushing flank (51) and two side flanks (52, 53).

8. The method according to claim 7, **characterised in that** the step of moving said first sidewall (21) provides for bringing the first sidewall (21) close to the first edge (121);
the step of bringing the first sidewall (21) close to the first edge (121) providing for detecting, by means of a first sensor (31) positioned on board the first sidewall (21), the relative position between the first sidewall (21) and the first edge (121);

9. The method according to claim 7 or 8, **characterised in that** said squaring device (2) comprises a second, a third and a fourth sidewall (22, 23, 24); said method comprises the step of bringing at least the second and the third sidewall (22, 23) close to corresponding edges of the penultimate upper layer (12).

10. The method according to claim 9, **characterised in that**, before moving the upper layer (11), it comprises the steps of:
- positioning the head (5) around the upper layer (12) of the stack; and then
- bringing the pushing flank (51) and the two side flanks (52, 53) close to the upper layer (11) based on information detected previously by the detection means (3) during the step of bringing the first sidewall (21) close to the first edge (121) and/or during the step of bringing the second and the third sidewall (22, 23) close to corresponding edges of the penultimate upper layer (12).
